# EUROPEAN PATENT SPECIFICATION

(11) **EP 1 672 233 B1**
(45) Date of publication and mention of the grant of the patent: **11.06.2008**
(21) Application number: 05102598.9
(22) Date of filing: 01.04.2005
(51) Int. Cl.: F16C 33/80

(54) **A pre-assembled sealing device unit for quick assembling and disassembling**
Vormontierte Dichtungseinrichtung zum schnellen montieren und demontieren
Ensemble prémonté de moyens d'étanchéité prévu pour un montage et démontage rapide

(30) Priority: 20.12.2004 IT TO20040888
(43) Date of publication of application: 21.06.2006
(73) Proprietor: RFT S.p.A., 10121 Torino (IT)
(72) Inventor: Foti, Claudio, 14010 Dusino San Michele (Asti) (IT)
(74) Representative: Fioravanti, Corrado

(56) References cited:
- EP-A- 0 942 188
- DE-A1- 3 824 212
- DE-A1- 19 504 315
- US-A- 5 292 199

## Description

The present invention refers to a pre-assemblable unit with a sealing device to be mounted in the hub of a heavy motor vehicle wheel and a component for assembling and disassembling such device. The invention can be implemented with non-driven wheel of heavy motor vehicles, particularly but not exclusively, trailers.

Heretofore, in order to hermetically seal a bearing unit in the hub of a heavy motor vehicle wheel a sealing device is used which comprises an annular metallic shield (called "flinger") fixed in the rotating hub, and an annular gasket mounted onto a stationary central shaft by means of a suitably shaped annular plate that allows to disassemble the sealing device. The flinger is supplied separately to the wheel assembler, who has to use a press to force fit the flinger in the cylindrical cavity of the hub near a seat accommodating the bearing unit. The gasket comprises a metallic insert with an L-shaped cross-section on which there is vulcanized a body of rubber or elastomeric material forming two dynamic sealing lips that slide against the flinger. A radial sealing lip is usually pressed against the outer flinger by an expansion spring. The gasket is forcedly mounted on the annular plate, which has a Z-shape in order to form an outer seat for the gasket and a flange projecting in a radially inner direction. This flange remains axially clamped between the bearing unit and a shoulder formed by an axially outer part of the central shaft.

When the bearing has to be reached, for example to carry out periodical check and maintenance operations, the outer part of the shaft is disassembled from the inner part and pulled out as a unit with the annular plate and the gasket.

DE 195 04 315 A1 discloses a sealing device for hermetically sealing a gap between the two races of a rolling contact bearing of a motor vehicle wheel. Such a sealing device has the features mentioned in the preamble of claim 12.

An object of the invention is to provide a pre-assembled unit capable of fulfilling at the same time the requirements of:
being mounted in the hub of a wheel through a single and easy manual operation, so as to dispense the assembler from having to use a press to force fit a conventional flinger; and
attain overall better sealing performances, both in terms of static sealing and dynamic sealing.

Another object of the invention is to provide a unit of compact dimensions, indifferently applicable to new hubs or pre-existing hubs in which the conventional flinger can be left, since its removal would require special apparatus.

These and other objects and advantages, that will be better understood herein after, are accomplished according to the invention by a pre-assembled unit having the features defined in claim 1. Preferred embodiments of the unit are defined in claims 2 to 11.

A further object of the invention is to provide an improved sealing device, and particularly to ensure that the dynamic sealing lips are always positioned correctly against the respective counterface surfaces, also after repeated disassembling and re-assembling operations.

This further object is fulfilled, according to the invention, by a sealing device as defined in claims 12 to 16.

The features and the advantages of the invention will be apparent from the detailed description of an embodiment thereof, made with reference to the appended drawings provided by way of non-limitative example, in which:
- figure 1 is a partial axial cross-sectional view of a unit according to the invention mounted in the hub of the wheel of a heavy motor vehicle;
- figure 2 is a partial axial cross-sectional view, to an enlarged scale, of the unit according to the invention; and
- figure 3 is a partial axial cross-sectional view of a sealing device according to the invention.

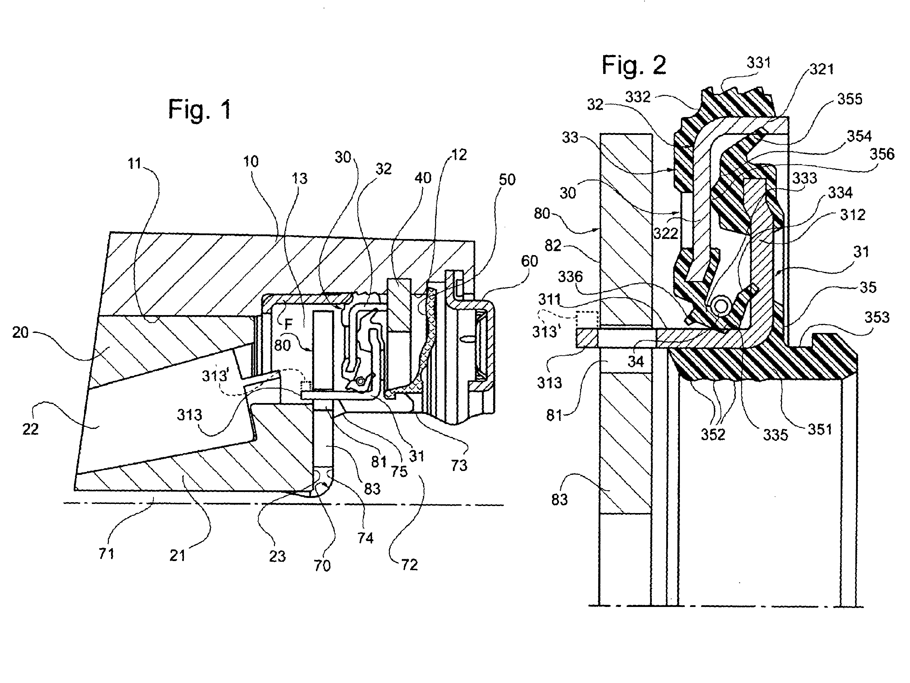

With reference initially to figure 1, a rotating hub 10 of the wheel of a heavy motor vehicle forms centrally a cylindrical seat 11 for a tapered roller bearing unit of conventional design having an outer rotatable race 20, an inner stationary race 21 and a plurality of rollers 22 interposed between the races 20 and 21. Towards the axially outer side (or outboard side) of the vehicle, the hub forms a lateral cylindrical cavity 12 of greater diameter than that of the central seat 11. The lateral cavity 12 accommodates a cassette sealing device 30, a circlip 40, a closure cap 50 of plastic material and a metallic phonic wheel or encoder 60 being part of a device for detecting rotational speed of the hub 10. A conventional metallic annular shield (or flinger) F, of the type discussed in the introductory part of the description, can also be found in the cavity 12.

A dual diameter shaft designated 70 consists of an axially inner part of smaller diameter 71 fitted co-axially in the inner stationary race 21 of the bearing unit, and an axially outer part of greater diameter 72. The two parts 71, 72 are usually formed by two distinctive members threadedly coupled to one another. The greater diameter part 72 has a substantially cylindrical surface 73 and a radial surface 74 facing an axially outer side surface 23 of the inner bearing race 21.

The sealing device 30 serves to seal the annular gap 13 between the hub cavity 12 and the shaft 70 to prevent external contaminants (water, dust, mud) from entering the inner parts of the bearing, and to prevent the lubricant grease, which is normally contained within the inner ambient of the bearing for lubricating the rolling surfaces, from leaking out.

The sealing device 30 comprises an annular metallic insert or shield 31 secured to the stationary shaft 70 and an annular metallic insert or shield 32 secured to the rotating hub 10. The stationary inner insert 31 has a substantially L-shaped axial cross-section with a cylindrical axial portion 311 extending in an axially inner direction and a radial wall 312 extending in a radially outer direction towards the hub cavity 12.

The rotating outer insert 32 has an axial cross-section of inverted L shape with an axial cylindrical portion 321 extending in an axially outer direction, and a radial wall 322 extending in a radially inner direction towards the shaft 70.

Vulcanized or co-moulded onto the outer rotating insert 32 is a body 33 of rubber or elastomeric material forming on the cylindrical portion 321 a saw-toothed sealing gasket 331 that performs a static outer sealing action against the cylindrical cavity 12 of the hub. A bevel 332 is provided at the end of the sealing gasket 331 at the axially inner side, so as not to interfere with a possible pre-existing metallic annular shield or flinger F, as will be explained more clearly in the following. The body 33 forms a V-shaped dynamic sealing gasket 333 projecting in a radially inner direction from the radial wall 332. The gasket 333 has an elongate axial sealing lip 334 slidingly engaging the radial wall 312 of the insert 31, a radial sealing lip 335 engaging the cylindrical portion 311 of the insert 31, and a lip 336 performing labyrinth seal with the same cylindrical portion 311. Contact of the radial lip 335 is ensured by a circumferential spring 34.

Vulcanized or co-moulded to the inner stationary inner 31 is a body 35 of rubber or elastomeric material forming a substantially tubular, inner portion 351 performing a static sealing action by being interposed between the cylindrical portion 311 of the shield 31 and the cylindrical surface 73 of the shaft 70. In order to facilitate fitting the elastic body 35 over the shaft 70, undulations 352 are advantageously formed at the axially inner side of the cylindrical cavity of the tubular portion 351. On the outside, this tubular portion forms a radial groove 353 for retaining the plastic closure cap 50.

The body 35 further forms a dynamic sealing gasket 354 with a radial sealing lip 355 projecting in a radially outer direction from the radial wall 312 and slidingly contacting the cylindrical wall 321 of the insert 32. The gasket 354 forms a plurality of discrete protuberances 356 (for example in the number of six-eight), circumferentially spaced from one another and projecting in an axially inner direction for abutting against the radial wall 322 of the opposite insert 32. The protuberances 356, that in the preferred embodiment are convex or rounded, serve to keep the correct axial distance between the shields 31 and 32, and, consequently, a degree of axial preload or interference that is necessary for a correct operation of the elongate lip 334.

The sealing device 30 is axially constrained to a flat annular disk 80 with a radially inner flange portion 83 which, in the assembled condition shown in the drawings, is axially interposed and clamped between the radial surface 74 of the shaft 70 and the surface 23 of the inner bearing race 21. The annular disk 80 has a plurality of axial openings 81 (for example three), angularly equally spaced in a circumferential direction. Through each opening 81 (only one of which is shown in the drawings) a respective tab 313 is inserted with some play and projecting at the axially inner end of the insert 31 beyond the axially inner side 82 of the disk 80. Each tab 313 is bent in a radially outer direction behind the side 82, as shown in phantom line at 313', in order to hook the disk 80.

The unit according to the invention is assembled as follows. The inserts 31 and 32 with relevant rubber bodies 33 and 35 are manufactured separately and assembled together, bringing the protuberances 356 in contact with the opposite wall 322. The so pre-assembled sealing device 30 is coupled to an annular disk 80, inserting the tabs 313 through the openings 81 and then bending the tabs as indicated at 313' behind the side 82 of the disk 80 in order to keep the sealing device and the annular disk together. The pre-assembled unit so obtained is then fitted manually in the cylindrical cavity 12 of a hub in which the bearing unit 20-22 and the axially inner part 71 of the shaft 70 have already been mounted. This manual insertion is facilitated by the saw-toothed formations of the outer, static sealing gasket 331. After the insertion, the inner side 82 of the annular disk 80 abuts against the outer side surface 23 of the inner bearing race 21. Then, the outer part 72 of the shaft is slipped through the tubular portion 351 of the rubber body 35. This operation is facilitated by the undulations 352 and a conical bevel 75 formed at the axially inner end of the cylindrical surface 73. The outer part 72 of the shaft is then threadedly coupled (in known manner) to the inner part 71, clamping the annular disk 80 axially between the radial facing surfaces 23 and 74. The assembling is completed by mounting the circlip 40, the cover 50 and the phonic wheel 60.

It will be appreciated that the two inserts of the sealing device 30 are correctly spaced due to the protuberances 356, which ensure a correct arrangement of the axial lip 334. It should be noted that in the drawings the rubber bodies 33 and 35 are depicted in their non-deformed conditions.

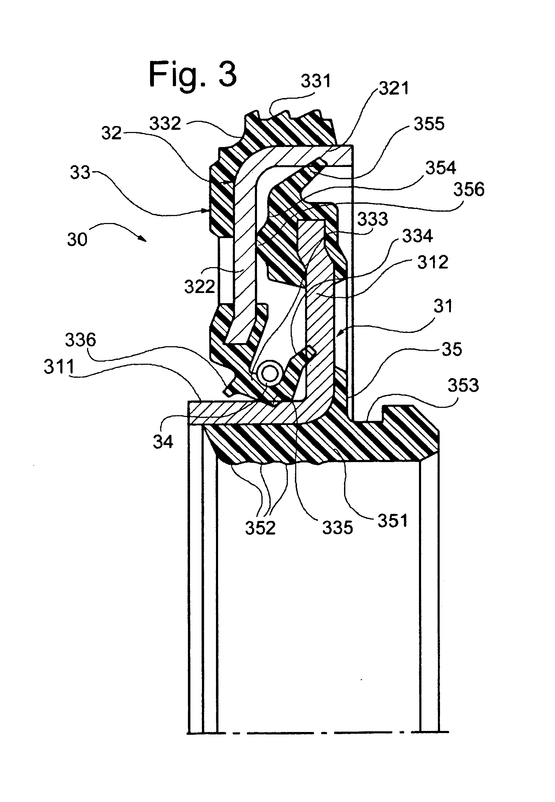

In figure 3 the sealing device 30 is shown separately. This sealing device differs from that shown in figure 2 only for the absence of the tabs 313. Except for the tabs 313, the detailed description of the sealing device of figure 2 equally applies also to the sealing device of figure 3.

When the inner parts of the bearing have to be reached, for example in order to carry out periodical maintenance, after removing the phonic wheel 60, the cover 50 and the circlip 40, the outer shaft part 72 is unscrewed to detach it from the inner part 71. By pulling the annular disk 80 outwards, also the entire sealing device 30 is withdrawn from the cavity 12 due to the tabs 313' that hook the disk 80. When the assembly 30, 80 is then re-inserted into the cavity 12, the axial force exerted on the sealing device 30 will bring the two inserts 31 and 32 to take a new relative position slightly closer as compared to the original one, owing to a possible wear (to a very small extent, however) of the protuberances 356. At any rate, this approach of the inserts does not affect the correct position of the dynamic sealing lips. As a matter of fact, the elongate lip 334 will contact the wall 312 with a tip zone different from the preceding one, and therefore not worn, and this tip zone will contact the wall 312 along a circle having a slightly greater diameter than the preceding one. As known to those skilled in the art, this favours sealing efficiency, since prolonged sliding contact tends to produce a track in the wall 312 that does not constitute an ideal counterface surface in terms of sealing action.

In summary, the invention offers the following advantages.
The wheel assembler receives a pre-assembled unit that can be mounted easily in the hub of the wheel through a single manual operation without requiring special apparatus (such as presses) as is required instead for a conventional flinger F. The insertion is facilitated by the orientation of the sawteeth, that effectively oppose the expulsion of the sealing device due to pressure developing within the bearing unit during operation. The rubber or elastomeric material which the body 32 is made of guarantees hermetic static sealing action against the cavity 12 of the hub.
The axially contact dimensions of the flat annular disk 80 and the sealing device 30 allow to fit the unit also on pre-existing hubs without interfering with possible flingers F which are difficult to remove. These flingers can be left in position without interfering with the sealing device.

The protuberances 356 guarantee a correct working position of the dynamic sealing lips overtime, also after repeated assembling and re-assembling operations.

The invention is not intended to be limited to the embodiments described and illustrated herein, which should be considered as examples of implementation of the invention; rather, the invention may be modified with regard to the shape, dimensions and arrangement of parts, constructional details and materials used. For example, the axial coupling between the disk 80 and the sealing device 30 could be attained by hooking tabs similar to those designated 313 but snap locking in corresponding openings or other hooking seats formed by the disk 80.

## Claims

1. A pre-assemblable unit to be mounted in a rotatable hub of the wheel of a heavy motor vehicle, the hub (10) providing a cylindrical axial cavity (12) at an axially outer position with respect to a bearing (20-22), the unit including:
an annular plate (80) having a radially inner flange portion (83) axially lockable between the bearing (21) and a radial surface (74) of an axially outer shaft portion (72) detachable from an axially inner shaft portion (71) fitted centrally in the bearing;
a sealing device (30) for hermetically sealing a gap (13) between the cylindrical cavity (12) and the outer shaft portion (72);
coupling means for axially coupling the sealing device (30) to the annular plate (80);
**characterized in that**
the annular plate (80) is a substantially flat radial disk;
and that the sealing device (30) includes
- a radially outer and rotatable annular metallic insert (32) supporting a gasket of rubber or elastomeric material (331) for performing static sealing action against the cylindrical cavity (12) and
- a radially inner and stationary annular metallic insert (31) mountable on the outer shaft portion (72);
and that
the coupling means comprise hooking means (313') and corresponding hooking seats (81) formed by axially inner end portions (313) of the stationary insert (31) and by the disk (80), respectively.

2. A unit according to claim 1, **characterized in that** the hooking seats include at least one axial opening (81) formed in the annular disk (80).

3. A unit according to claim 2, **characterized in that** the hooking means (313') comprise at least one end tab (313) of the stationary insert (31), said tab being inserted through the opening (81) and bent (313') beyond an axially inner side (82) of the disk (80).

4. A unit according to claim 3, **characterized in that** said tab is bent (313') in a radially outer direction.

5. A unit according to claim 3, **characterized in that** said hooking seats and hooking means comprise a plurality of openings (81) and corresponding tabs (313) each axially aligned with a respective opening (81).

6. A unit according to claim 5, **characterized in that** the openings (81) and the tabs (313) are angularly equally spaced in a circumferential direction.

7. A unit according to claim 1, **characterized in that** the static sealing gasket (331) forms radially outer saw-toothed crests oriented so as to facilitate inserting the sealing device into the cylindrical cavity (12) in an axially inner direction.

8. A unit according to claim 1, **characterized in that** the static sealing gasket (331) has a bevelled axially inner end (332).

9. A unit according to claim 1, **characterized in that** the two annular inserts (31, 32) of the sealing device (30) form respective radial walls (312, 322) axially facing one another, and that at least one (31) of the two inserts supports a dynamic sealing gasket made of rubber or elastomeric material (354) having axially protruding protuberances (356) which contact the radial wall (322) of the opposite insert (32) so as to keep the two inserts axially spaced from one another.

10. A unit according to claim 9, **characterized by** comprising a plurality of said protuberances (356) distributed discretely and circumferentially spaced from one another.

11. A unit according to claim 10, **characterized in that** the protuberances (356) have convex or rounded surfaces for contacting the radial wall (322) of the opposite insert (32).

12. A sealing device for hermetically sealing a gap (13) between an axial cylindrical cavity (12) of a rotatable hub (10) of a wheel of a heavy motor vehicle and a cylindrical surface (73) of a shaft (70, 72) mounted centrally and co-axially in said cavity (12), the sealing device (30) including
- a first, radially outer and rotatable annular metallic insert (32)
- a second, radially inner and stationary annular metallic insert (31), mountable on the outer shaft portion (72);
- a first body of rubber or elastomeric material (33) fixed to the first insert (32) and forming a radially outer portion (331) for performing static sealing action against the cylindrical cavity (12) and a radially inner portion (333) slidingly contacting the second insert (31) for performing a dynamic sealing action;
- a second body of rubber or elastomeric material (35) fixed to the second insert (31) and forming
- a radially inner tubular portion (351) performing static sealing action, adapted for being interposed between a cylindrical portion (311) of the second insert (31) and the cylindrical surface (73) of the shaft (70, 72), and
- a portion (354), projecting in a radially outer direction from a radial wall (312) of the second insert (31), slidingly engaging the first insert (32) for performing dynamic sealing action;
**characterized in that**
the two annular inserts (31, 32) of the sealing device (30) form respective radial walls (312, 322) axially facing one another, and
that at least one (35) of the two rubber bodies (33, 35) forms, on one (312) of said walls, a plurality of protuberances (356) axially projecting towards the opposite wall (322) so as to keep the two inserts axially spaced from one another.

13. A sealing device according to claim 12, **characterized by** comprising a plurality of said protuberances (356) distributed discretely and spaced circumferentially from one another.

14. A sealing device according to claim 12 or 13, **characterized in that** the protuberances (356) have convex or rounded surfaces for contacting the opposite radial wall (322).

15. A sealing device according to any one of claims 12 to 14, **characterized in that** the dynamic sealing portion (333) of the first rubber body (33) forms a gasket having a substantially V-shaped axial cross-section with an elongate axial sealing lip (334) slidingly engaging a radial wall (312) of the second insert (31).

16. A sealing device according to claim 12, **characterized in that** the radially outer static sealing portion (331) of the first rubber body (33) forms radially outer saw-toothed crests oriented so as to facilitate inserting the sealing device into the cylindrical cavity (12) in an axially inner direction.

## Patentansprüche

1. Vormontierbare Einheit zum Anbringen in einer drehbaren Radnabe eines schweren Kraftfahrzeugs, wobei die Nabe (10) eine zylindrische axiale Aussparung (12) an einer bezüglich eines Lagers (20-22) axial äußeren Position bereitstellt, und wobei die Einheit umfasst:
- eine ringförmige Platte (80), welche einen radial inneren Flanschabschnitt (83) aufweist, der axial zwischen dem Lager (21) und einer radialen Fläche (74) eines axial äußeren Achsabschnitts (72) arretierbar ist, welcher von einem zentrisch in das Lager eingebauten, axial inneren Achsabschnitt (71) lösbar ist;
- eine Dichtungsvorrichtung (30) zum hermetischen Abdichten eines Spalts (13) zwischen der zylindrischen Aussparung (12) und dem äußeren Achsabschnitt (72);
- Verbindungsmittel zum axialen Verbinden der Dichtvorrichtung (30) mit der ringförmigen Platte (80);
**dadurch gekennzeichnet, dass**
die ringförmige Platte (80) eine im Wesentlichen flache radiale Scheibe ist;
und dass die Dichtungsvorrichtung (30) umfasst
- einen radial äußeren und drehbaren ringförmigen metallischen Einsatz (32), welcher eine Dichtung aus Gummi oder einem elastomeren Material (331) abstützt zur Durchführung einer statischen Abdichtwirkung in Bezug auf die zylindrische Aussparung (12) und
- einen radial inneren und stationären ringförmigen metallischen Einsatz (31), welcher an dem äußeren Achsabschnitt (72) anbringbar ist;
und dass
die Verbindungsmittel Hakenmittel (313') und entsprechende Hakensitze (81) umfassen, die durch axial innere Endabschnitte (313) des stationären Einsatzes (31) beziehungsweise durch die Scheibe (80) gebildet werden.

2. Einheit nach Anspruch 1, **dadurch gekennzeichnet, dass** die Hakensitze wenigstens eine axiale Öffnung (81) umfassen, welche in der ringförmigen Scheibe (80) gebildet ist.

3. Einheit nach Anspruch 2, **dadurch gekennzeichnet, dass** die Hakenmittel (313') wenigstens eine Endnase (313) des stationären Einsatzes (31) umfassen, wobei die Nase durch die Öffnung (81) eingeführt und jenseits einer axial inneren Seite (82) der Scheibe (80) gebogen ist (313').

4. Einheit nach Anspruch 3, **dadurch gekennzeichnet, dass** die Nase in eine radial äußere Richtung gebogen ist (313').

5. Einheit nach Anspruch 3, **dadurch gekennzeichnet, dass** die Hakensitze und die Hakenmittel eine Mehrzahl von Öffnungen (81) und entsprechende Nasen (313), von denen jede axial zu einer jeweiligen Öffnung (81) ausgerichtet ist, umfassen.

6. Einheit nach Anspruch 5, **dadurch gekennzeichnet, dass** die Öffnungen (81) und die Nasen (313) gleiche Winkelabstände in einer Umfangsrichtung aufweisen.

7. Einheit nach Anspruch 1, **dadurch gekennzeichnet, dass** die statische Abdicht-Dichtung (331) radial äußere sägezahnförmige Kuppen bildet, welche derart orientiert sind, dass sie das Einsetzen der Dichtungsvorrichtung in die zylindrische Aussparung (12) in eine axial innere Richtung erleichtern.

8. Einheit nach Anspruch 1, **dadurch gekennzeichnet, dass** die statische Abdicht-Dichturlg (331) ein abgekantetes axial inneres Ende (332) aufweist.

9. Einheit nach Anspruch 1, **dadurch gekennzeichnet, dass** die beiden ringförmigen Einsätze (31, 32) der Dichtungsvorrichtung (30) jeweilige radiale, sich axial aneinander zugekehrte Wände (312, 322) bilden, und dass wenigstens einer (31) der beiden Einsätze eine dynamische Abdicht-Dichtung aus Gummi oder einem elastomeren Material (354) abstützt, welcher axial hervorstehende Ausstülpungen (356) aufweist, die die radiale Wand (322) des gegenüberliegenden Einsatzes (32) derart berührt, dass die beiden Einsätze axial im Abstand voneinander angeordnet sind.

10. Einheit nach Anspruch 9, **dadurch gekennzeichnet, dass** sie eine Mehrzahl der Ausstülpungen (356) umfasst, die diskret und in Umfangsrichtung von einander beabstandet verteilt sind.

11. Einheit nach Anspruch 10, **dadurch gekennzeichnet, dass** die Ausstülpungen (356) konvexe oder abgerundete Flächen aufweisen, zum Berühren der radialen Wand (322) des gegenüberliegenden Einsatzes (32).

12. Dichtungsvorrichtung zum hermetischen Abdichten eines Spalts (13) zwischen einer axial zylindrischen Aussparung (12) einer drehbaren Radnabe (10) eines schweren Kraftfahrzeuges und einer zylindrischen Fläche (73) einer Achse (70, 72), die mittig und koaxial in der Aussparung (12) angebracht ist, wobei die Dichtungsvorrichtung (30) umfasst
- einen ersten, radial äußeren und drehbaren ringförmigen metallischen Einsatz (32)
- einen zweiten, radial inneren und stationären ringförmigen metallischen Einsatz (31), welcher an dem äußeren Achsabschnitt (72) anbringbar ist;
- einen ersten Körper aus Gummi oder einem elastomeren Material (33), der an dem ersten Einsatz (32) befestigt ist und einen radial äußeren Abschnitt (331) zur Durchführung einer statischen Abdichtwirkung gegenüber der zylindrischen Aussparung (12) und einen radial inneren Abschnitt (333), der zur Durchführung einer dynamischen Abdichtwirkung mit dem zweiten Einsatz (31) in Gleitkontakt steht, bildet;
- einen zweiten Körper aus Gummi oder einem elastomeren Material (35), der an dem zweiten Einsatz (31) befestigt ist und
- einen radial inneren röhrenförmigen Abschnitt (351) bildet, der eine statische Abdichtwirkung durchführt und dazu geeignet ist, zwischen einem zylindrischen Abschnitt (311) des zweiten Einsatzes (31) und der zylindrischen Fläche (73) der Achse (70, 72) eingefügt zu werden, sowie
- einen Abschnitt (354) bildet, welcher in eine radial äußere Richtung von einer radialen Wand (312) des zweiten Einsatzes (31) hervorsteht und mit dem ersten Einsatz (32) zur Durchführung einer dynamischen Abdichtwirkung gleitend im Eingriff steht;
**dadurch gekennzeichnet, dass**
die beiden ringförmigen Einsätze (31, 32) der Dichtungsvorrichtung (30) jeweilige, axial einander zugekehrte radiale Wände (312, 322) bilden, und
dass wenigstens einer (35) der beiden Gummikörper (33, 35) an einer (312) der Wände eine Mehrzahl von Ausstülpungen (356) bildet, die axial in Richtung der gegenüberliegenden Wand (322) derart hervorstehen, dass die beiden Einsätze axial im Abstand voneinander angeordnet sind.

13. Dichtungsvorrichtung nach Anspruch 12, **dadurch gekennzeichnet, dass** sie eine Mehrzahl von Ausstülpungen (356) umfasst, die diskret und in Umfangsrichtung von einander beabstandet verteilt sind.

14. Dichtungsvorrichtung nach Anspruch 12 oder 13, **dadurch gekennzeichnet, dass** die Ausstülpungen (356) konvexe oder abgerundete Flächen zum Berühren der gegenüberliegenden radialen Wand (322) aufweisen.

15. Dichtungsvorrichtung nach einem der Ansprüche 12 bis 14, **dadurch gekennzeichnet, dass** der dynamische Dichtungsabschnitt (333) des ersten Gummikörpers (33) eine Dichtung bildet, die einen im Wesentlichen V-förmigen axialen Querschnitt mit einer lang gestreckten axialen Dichtlippe (334) aufweist, welche gleitend im Eingriff mit einer radialen Wand (312) des zweiten Einsatzes (31) steht.

16. Dichtungsvorrichtung nach Anspruch 12, **dadurch gekennzeichnet, dass** der radial äußere statische Dichtungsabschnitt (331) des ersten Gummikörpers (33) radial äußere sägezahnförmige Kuppen bildet, welche derart orientiert sind, dass sie das Einsetzen der Dichtungsvorrichtung in die zylindrische Aussparung (12) in eine axial innere Richtung erleichtern.

## Revendications

1. Unité pré-assemblable destinée à être montée dans un moyeu rotatif de la roue d'un véhicule à moteur lourd, le moyeu (10) fournissant une cavité axiale cylindrique (12) à une position axialement extérieure par rapport à un palier (20 à 22), l'unité comprenant :
une plaque annulaire (80) ayant une partie de rebord radialement intérieure (83) verrouillable axialement entre le palier (21) et une surface radiale (74) d'une partie d'arbre axialement extérieure (72) démontable d'une partie d'arbre axialement intérieure (71) ajustée centralement dans le palier ;
un dispositif d'étanchéité (30) pour fermer hermétiquement un espace (13) entre la cavité cylindrique (12) et la partie d'arbre extérieure (72) ;
des moyens de couplage pour coupler axialement le dispositif d'étanchéité (30) à la plaque annulaire (80) ;
**caractérisée en ce que**
la plaque annulaire (80) est un disque radial sensiblement plat ;
et **en ce que** le dispositif d'étanchéité (30) comprend
- un insert métallique annulaire radialement extérieur et rotatif (32) supportant un joint en caoutchouc ou en matériau élastomère (331) pour réaliser une action d'étanchéité statique contre la cavité cylindrique (12) et
- un insert métallique annulaire radialement intérieur et fixe (31) propre à être monté sur la partie d'arbre extérieure (72);
et **en ce que**
les moyens de couplage comprennent des moyens d'accrochage (313') et des sièges d'accrochage correspondants (81) formés par des parties d'extrémité axialement intérieures (313) de l'insert fixe (31) et par le disque (80), respectivement.

2. Unité selon la revendication 1, **caractérisée en ce que** les sièges d'accrochage comprennent au moins une ouverture axiale (81) formée dans le disque annulaire (80).

3. Unité selon la revendication 2, **caractérisée en ce que** les moyens d'accrochage (313') comprennent au moins une patte d'extrémité (313) de l'insert fixe (31), ladite patte étant insérée à travers l'ouverture (81) et courbée (313') au-delà d'un côté axialement intérieur (82) du disque (80).

4. Unité selon la revendication 3, **caractérisée en ce que** ladite patte est courbée (313') dans une direction radialement extérieure.

5. Unité selon la revendication 3, **caractérisée en ce que** lesdits sièges d'accrochage et moyens d'accrochage comprennent une pluralité d'ouvertures (81) et de pattes correspondantes (313) chacune étant alignée axialement avec une ouverture respective (81).

6. Unité selon la revendication 5, **caractérisée en ce que** les ouvertures (81) et les pattes (313) sont espacées régulièrement de manière angulaire dans une direction circonférentielle.

7. Unité selon la revendication 1, **caractérisée en ce que** le joint d'étanchéité statique (331) forme des sommets en dents de scie radialement extérieurs orientés afin de faciliter l'insertion du dispositif d'étanchéité dans la cavité cylindrique (12) dans une direction axialement intérieure.

8. Unité selon la revendication 1, **caractérisée en ce que** le joint d'étanchéité statique (331) possède une extrémité axialement intérieure biseautée (332).

9. Unité selon la revendication 1, **caractérisée en ce que** les deux inserts annulaires (31, 32) du dispositif d'étanchéité (30) forment des parois radiales respectives (312, 322) se faisant face axialement, et **en ce qu'**au moins un insert (31) parmi les deux inserts supporte un joint d'étanchéité dynamique fait de caoutchouc ou de matériau élastomère (354) ayant des protubérances faisant saillie axialement (356) qui sont en contact avec la paroi radiale (322) de l'insert opposé (32) afin de maintenir les deux inserts espacés axialement l'un de l'autre.

10. Unité selon la revendication 9, **caractérisée en ce qu'**elle comprend une pluralité desdites protubérances (356) réparties séparément et espacées de manière circonférentielle les unes des autres.

11. Unité selon la revendication 10, **caractérisée en ce que** les protubérances (356) ont des surfaces convexes ou arrondies pour entrer en contact avec la paroi radiale (322) de l'insert opposé (32).

12. Dispositif d'étanchéité pour fermer hermétiquement un espace (13) entre une cavité cylindrique axiale (12) d'un moyeu rotatif (10) d'une roue d'un véhicule à moteur lourd et une surface cylindrique (73) d'un arbre (70, 72) monté centralement et coaxialement dans ladite cavité (12), le dispositif d'étanchéité (30) comprenant
- un premier insert métallique annulaire radialement extérieur et rotatif (32)
- un deuxième insert métallique annulaire radialement intérieur et fixe (31), propre à être monté sur la partie d'arbre extérieure (72) ;
- un premier corps en caoutchouc ou en matériau élastomère (33) fixé sur le premier insert (32) et formant une partie radialement extérieure (331) pour réaliser une action d'étanchéité statique contre la cavité cylindrique (12) et une partie radialement intérieure (333) en contact glissant avec le deuxième insert (31) pour réaliser une action d'étanchéité dynamique ;
- un deuxième corps en caoutchouc ou en matériau élastomère (35) fixé sur le deuxième insert (31) et formant
- une partie tubulaire radialement intérieure (351) réalisant une action d'étanchéité statique, adaptée pour être intercalée entre une partie cylindrique (311) du deuxième insert (31) et la surface cylindrique (73) de l'arbre (70, 72), et
- une partie (354), faisant saillie dans une direction radialement extérieure depuis une paroi radiale (312) du deuxième insert (31), mettant en prise de manière glissante le premier insert (32) pour réaliser une action d'étanchéité dynamique ;
**caractérisé en ce que**
les deux inserts annulaires (31, 32) du dispositif d'étanchéité (30) forment des parois radiales respectives (312, 322) se faisant face axialement, et
**en ce qu'**au moins un corps (35) parmi les deux corps en caoutchouc (33, 35) forme, sur une paroi (312) desdites parois, une pluralité de protubérances (356) faisant saillie axialement vers la paroi opposée (322) afin de maintenir les deux inserts espacés axialement l'un de l'autre.

13. Dispositif d'étanchéité selon la revendication 12, **caractérisé en ce qu'**il comprend une pluralité desdites protubérances (356) réparties séparément et espacées de manière circonférentielle les unes des autres.

14. Dispositif d'étanchéité selon la revendication 12 ou 13, **caractérisé en ce que** les protubérances (356) possèdent des surfaces convexes ou arrondies pour entrer en contact avec la paroi radiale opposée (322).

15. Dispositif d'étanchéité selon l'une quelconque des revendications 12 à 14, **caractérisé en ce que** la partie d'étanchéité dynamique (333) du premier corps en caoutchouc (33) forme un joint ayant une coupe axiale sensiblement en forme de V avec une lèvre d'étanchéité axiale allongée (334) mettant en prise de manière glissante une paroi radiale (312) du deuxième insert (31).

16. Dispositif d'étanchéité selon la revendication 12, **caractérisé en ce que** la partie d'étanchéité statique radialement extérieure (331) du premier corps en caoutchouc (33) forme des sommets en dents de scie radialement extérieurs orientés afin de faciliter l'insertion du dispositif d'étanchéité dans la cavité cylindrique (12) dans une direction axialement intérieure.
